(19)

Europäisches
Patentamt
European
Patent Office
Office européen
des brevets

(11) **EP 2 397 814 A2**

(12) **EUROPEAN PATENT APPLICATION**

(43) Date of publication:
**21.12.2011 Bulletin 2011/51**

(51) Int Cl.:
**G01B 11/25** *(2006.01)*     **G06K 9/00** *(2006.01)*

(21) Application number: **11170509.1**

(22) Date of filing: **20.06.2011**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **18.06.2010 GB 1010244**

(71) Applicant: **Hyde, John
Doncaster
DN5 7UP (GB)**

(72) Inventor: **Hyde, John
Doncaster
DN5 7UP (GB)**

(74) Representative: **Harrison Goddard Foote
Belgrave Hall
Belgrave Street
Leeds, Yorkshire LS2 8DD (GB)**

(54) **Line and Image Capture for 3D Model Generation in High Ambient Lighting Conditions**

(57)     There is disclosed a projection system for projecting a pattern of parallel lines onto an object for 3D model generation. The projection system comprises a light source, focussing means for focussing light from the light source at a focal plane, masking means for applying the pattern to the light, and a lens system for projecting the patterned light onto the object. The light source is a linear light source having a longitudinal axis, and the focussing means focuses the light from the light source to a line in the focal plane parallel to the longitudinal axis, thereby to project an image that is well-focussed in a direction perpendicular to the longitudinal axis and relatively less focussed in a direction parallel to the longitudinal axis.

Fig 1

**Description**

This invention relates to a method and apparatus for projecting coded and uncoded lines with high definition in a single axis onto a 3D surface to facilitate 3D model generation.

**BACKGROUND**

Significant effort and interest has been applied to automatic recognition of objects for a wide range of applications. The present application relates to the use of human face recognition as an example of recognition systems, but the techniques detailed within the application have application in a wide range of machine vision applications. It will be shown that embodiments of the present invention are particularly suitable for the acquisition of imaging data that can be used to build 3D computer models of fast-moving objects. As the disclosed technique acquires all of the data in a single, high speed frame, it is particularly suitable for analysis of impact deformations in object collision, for example.

Recognition systems mainly but not exclusively work based on 2D images or 3D images. 3D images are built by techniques such as stereoscopic vision or laser line scanning of a rotating object. These techniques generally require multiple images to acquire sufficient data to construct a model. This creates significant problems when working with moving objects. An alternative is the use of 2D images with the addition of depth information. An academic paper which explains these techniques in detail is 'Capturing 2½D Depth and Texture of Time-Varying Scenes Using Structured Infrared Light', Christian Frueh and Avideh Zakhor, Department of Computer Science and Electrical engineering, University of California, Berkeley; CVPR '05 Proceedings of the 2005 IEEE Computer Science Conference on Computer Vision and Pattern Recognition; Workshops; Volume 3; page 102; 2005. There is also known patent application GB 2410794 A, 'Apparatus and methods for three dimensional scanning', Marcos A Rodrigues, Alan Robinson and Lyuba Alboul, Sheffield Hallam University. This technique produces two 2D images, a normal image from a standard camera system operating in the visible spectrum, and an image with the projected line structure superimposed on it. The normal image may be monochrome or colour but in face recognition systems is usually colour. Systems for product or object recognition may use monochrome where colour information is less important. A line projection system is used to project a line structure onto the target object. The projector is placed in a different axis to the camera such that distortion in the pattern as seen by the camera provides depth information (Figure 4). This is explained in more detail in GB 2410794. The depth information then provides a framework on which the 2D image may be rendered, providing a limited 3D model of the subject.

One of the major problems of line projection in practical situations is one of signal to noise. If ambient light is treated as noise and the information from the stripe projection is treated as the signal, then the lighter regions of the stripes must be significantly brighter than intensity generated by ambient light. The image acquisition must then be adjusted such that the dark area of the projected pattern is seen as a dark stripe. In applications such as facial recognition, the pattern projection will be in front of the subject and may cause significant discomfort if the projected pattern is to be bright enough to overcome the ambient light issue. This is especially the case as the subject will be looking at the projector. Embodiments of the present invention show how a unique combination of projection methodology coupled with image acquisition technology can provide high definition projected patterns that appear significantly brighter than the ambient background whilst the object (person) is barely, if at all, aware that the process is under way. Moreover, embodiments of the present invention provide means for acquiring striped image data of fast-moving objects illuminated in high ambient lighting.

High speed xenon flash technology is often employed to generate high intensity light for very short time periods, 10 to 200$\mu$s. The intensity of the light is significantly higher than background ambient lighting but due to its very short duration the average intensity is lower than the ambient. In a typical high ambient application the illumination may be around 20 Watts/m$^2$ or 20 Joule/second/m$^2$. In other words, xenon flash technology produces very high intensity light over very short periods of time. As a consequence, a xenon flash system producing the same average intensity as an ambient source, but in 100$\mu$s rather than over 1s, produces a peak intensity 10,000 times brighter than ambient light. This is the basis of xenon flash photography that has been employed in traditional photographic applications for several decades now. It is thus possible to illuminate an object at intensities significantly above ambient without excessive average illumination.

For a practical example, consider an image capture device that exposes for periods of around 20ms in typical lighting conditions. When global shutter devices are employed, they will expose for a period then shut off the response to light. The exposure time can be electronically controlled over a wide range of time periods. If the shutter is set to 50$\mu$s instead of 20ms the received signal due to ambient light is reduced by $20 \times 10^{-3}/50 \times 10^{-6}$ or 400:1.

Considering a viewing region of 500mm x 500mm for a period of 50$\mu$s, the energy from ambient light may be in the region of:

$$0.5m \text{ x } 0.5m \text{ x } 20 \text{ Watts/m}^2 \text{ x } 50\mu s = 250\mu J$$

A 6 Joule Xenon flash, assumed to be a point source, produces approximately 1.5 $\mu$J/mm$^2$ on a sphere with 550mm radius. The same flat 500mm x 500mm plane, 500mm from the Xenon flash would receive approximately 500 500 $\times$ 1.5 $\times 10^{-6} \times$ (the efficiency of flash system) Joules. Assuming an efficiency of 10%, the energy is 37.5mJ. The flash is therefore in the region of 150 times brighter than the ambient light as seen by the imaging device. However if it is assumed that the human eye averages over a period of 20ms, the flash appears around half as bright as the ambient lighting as ambient energy over 20ms rises to 0.1J but the single flash remains at 0.0375J.

Reducing exposure time and flash duration will further improve this situation such that, if the flash energy was all used in a 10$\mu$s period, the flash would appear 750 times brighter than the image from ambient lighting. This is however dependent on synchronising the shutter opening time with the duration of the flash.

When high speed flash photography is employed in this manner the resulting image is of the same intensity level as if using ambient background light but contains light almost exclusively from the flash source. The intrusive effect of the flash can be further reduced if a matching infra-red pass band filter is applied to both the xenon flash system and the imaging device. If the cut-off wavelength is around 850nm and the xenon flash is IR-rich, the light from the projection system will be virtually invisible to a human subject, but would still provide high contrast images even in IR-rich sunlight environments. A coded pattern projected from a xenon based projection system, viewed synchronously by a global shutter imaging system, would have a signal to noise improvement in the region of 100's:1. Black segments of the projected pattern appear black even in high ambient light conditions. This method of ambient light rejection for facial recognition is a well-known technology, and is employed in systems such as those developed by Perception Sensors & Instrumentation Ltd and marketed by OmniPerception Ltd and Aurora Computer Services Ltd in the UK.

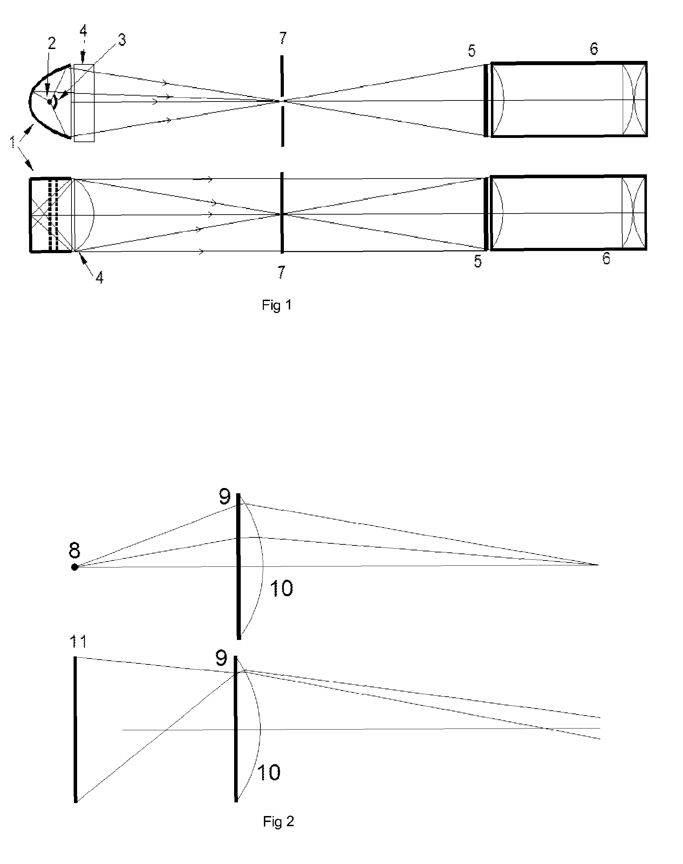

In projection systems the quality of the final image and its depth of field are very dependent on the quality of the light source. The ideal source is a point where the light from the source can pass through the object to be projected in one path only. If the source is large then light passes from several different points on the source through the object, and this results in blurring of the image and reduction in depth of field (see Figure 2).

The general technological prejudice in projection systems is therefore to provide the closest approximation to a true point source as possible. There exist short arc xenon flash bulbs that are very small and go some way to approximating a point source, but these are very expensive and of relatively low power compared to larger xenon flash tubes.

## BRIEF SUMMARY OF THE DISCLOSURE

In accordance with a first aspect of the present invention, there is provided a projection system for projecting a pattern onto an object, wherein the projection system comprises a light source, focussing means for focussing light from the light source at a focal plane, masking means for applying the pattern to the light, and a lens system for projecting the patterned light onto the object; characterised in that the light source is a linear light source having a longitudinal axis and in that the focussing means focuses the light from the light source to a line in the focal plane parallel to the longitudinal axis, thereby to project an image that is well-focussed in a direction perpendicular to the longitudinal axis and relatively less focussed in a direction parallel to the longitudinal axis.

In other words, this aspect allows the use of linear light sources, such as a linear gas discharge tube, preferably a xenon flash tube (although other types of linear light source, including other gas discharge tubes, may be useful in some applications), these being much cheaper and more powerful than xenon flash bulbs that approximate to a point light source. The invention is in part based on the realisation that, when projecting an image of parallel lines for the purpose of 3D model generation, it is only necessary to provide accurate focus in a direction perpendicular to the direction of the parallel lines. This is to ensure a sharp distinction between the edges of adjacent lines. It is not so important to achieve sharp focus in a direction along the direction of the parallel lines, since information is not typically encoded on the lines in this direction. The surprising realisation that good focus and depth of field is required only in one direction and not in a perpendicular direction is an important concept underlying embodiments of the present invention.

In certain embodiments, the focussing means comprises a curved, semi-cylindrical reflector positioned behind the linear light source. By semi-cylindrical is meant that the reflector is concave with a curved cross-section that is substantially constant along its length, which length is itself substantially parallel to the linear light source. The curved cross-section may be substantially parabolic or similar to a parabola. The reflector is configured, and the linear light source is positioned, so as to focus the light from the linear light source onto a line along the focal plane, the line along the focal plane being substantially parallel to the longitudinal axis of the linear light source.

A second, smaller reflector may be positioned in front of the linear light source to reflect directly forwardly routing rays back to the main reflector. This blocks light travelling along an undesirable path and reducing image quality, and also improves efficiency by reflecting it along a useful path. This second reflector may be omitted when lower power projection is acceptable.

In addition, cylindrical optics, for example a cylindrical lens, is preferably provided in front of the linear light source and the reflector or reflectors so as to help to focus the light onto a line. It will be understood that a cylindrical lens means a lens that focuses light onto a line, rather than onto a point (as a spherical lens would do). The term cylindrical is not to be construed as defining the shape of the lens, which will generally take the form of a segment of a cylinder.

The provision of cylindrical focussing components allows independent control or optimization of optical efficiency of the system independently in two axes. The line nature of the light allows the use of a slot aperture so as to reduce unwanted rays entering the projection system.

An opaque mask may be located at the focal plane, with a longitudinal slot provided along the line where the light from the linear light source is focussed. The mask serves to block stray light produced from the inevitably non-ideal nature of the linear light source and the reflector from entering the projection optics.

Projection optics are provided on the side of the focal plane remote from the side on which the linear light source is located. The projection optics comprise a patterned mask, which generates the pattern that is to be projected, and a suitable lens assembly for projecting the pattern onto the object.

The patterned mask is typically in the form of a set of substantially parallel slots all oriented substantially parallel to the linear light source, the reflector and the line in the focal plane on which the light is focussed. The patterned mask may also be configured to allow passage of only certain wavelengths or ranges of wavelengths, such as near infra red (NIR), ultra violet (UV) or visible wavelengths of particular colours. This type of patterned mask, together with the projection optics, serves to project a set of substantially parallel lines onto an object. The lines may be coded, non-coded, coloured, NIR, UV, non-coloured etc., but in all cases will be sharply focussed and high definition in a direction perpendicular to the lines, while not being as well focussed in a direction along the lines.

In applications where not such high intensity light is required (for example, where ambient light is low), it is possible to dispense with the reflector(s) and simply to locate the linear light source along the line in the focal plane.

In accordance with a second aspect of the present invention, there is provided a projection system for projecting a pattern onto an object, wherein the projection system comprises a light source, masking means for applying the pattern to the light, and a lens system for projecting the patterned light onto the object, the lens system having a focal plane towards the light source; characterised in that the light source is a linear light source having a longitudinal axis and in that the linear light source is located along a line in the focal plane, thereby to project an image that is well-focussed in a direction perpendicular to the longitudinal axis and relatively less focussed in a direction parallel to the longitudinal axis.

The combination of the use of high speed xenon flash technology coupled with NIR filtering and the use of synchronised global shutter image devices gives enhanced image capture in difficult lighting applications. When this is coupled with the use of a linear tube construction for the xenon tube and the single high resolution axis projection methodology described, it is possible to capture 2D image data with projected encoded patterns enabling 3D model generation in high ambient lighting conditions. It is also possible to extract these images when subjects are in front of windows with high levels of light coming from behind the subject.

Xenon flash technology is currently preferred since it can be pulsed in the desired manner and achieves good results. However, other light sources having appropriate characteristics may be used, for example gas discharge lamps other than xenon lamps, or even filament or other types of light source. For some applications, laser sources might be used. Pulsed sources are preferred since a higher intensity of light can be obtained at lower overall energy consumption.

## BRIEF DESCRIPTION OF THE DRAWINGS

Embodiments of the invention are further described hereinafter with reference to the accompanying drawings, in which:

Figures 1 a and 1b show a projection system of an embodiment of the present invention viewed in two axes;

Figures 2a and 2b show respectively an ideal point source and a non-ideal source in a projection system;

Figure 3 shows variations in a projected line image;

Figure 4 shows a first implementation of an embodiment in schematic form;

Figure 5 shows a second implementation of an embodiment in schematic form;

Figure 6 illustrates how a 3D model may be generated by way of an embodiment of the present invention; and

Figure 7 shows an image acquired of a subject.

**DETAILED DESCRIPTION**

Figure 1 shows the line projection system viewed in two axes. The light source (2) is mounted in front of a cylindrical collecting reflector (1). Light emitting in a forward direction from the light source (2) is reflected back by reflector (3) reducing unwanted uncontrolled forward light. A cylindrical lens (4) is mounted in front of (1), (2), and (3) such that it focuses light in a plane 90° to that of (1) and (3). A line of light is produced focussed on aperture (7). Aperture (7) reduces light produced from the non-ideal nature of (2) and (1) entering the projection optics. Aperture (7) is in the form of a slot thus providing a virtual line light source. The pattern to be projected (5) is mounted in front of the projection optics (6) and may be in any form producing a line structure, coloured, in the NIR spectrum, coded or un-coded. Projection optics (6) project an image of the objective (5) such that image is focussed on a plane of interest.

As xenon flash tubes are manufactured in a variety of shapes, they are unsuitable for projection systems with the exception of short arc xenon flash tubes which are very expensive and relatively low power compared to other xenon flash tubes. However in the application of 3D model generation from line projection, it is possible to provide coded or un-coded lines that require high definition in one axis only. Embodiments of the invention use a linear xenon tube which is independently focussed in two axes, as shown in Figure 1. This results in a light source that approaches a point source in the x axis and a non-ideal source in the y axis. Focussing of the light source (2) in the x axis is via a reflector (1) similar to a parabolic reflector but instead of focussing a point source to produce a parallel beam, it produces a second focal point some distance in front of the mirror. This is specifically in the x axis only so the reflector is similar to a parabolic cylinder. This allows the use of an aperture placed close to the focal point and reduces the amount of stray light from the light source. An alternative is the use of a parabolic cylindrical reflector to produce a parallel beam in a single axis. This also allows the projection of high definition lines on a single axis but more stray light passes into the projection system reducing the contrast ratio of the projected image. A second reflector (3) is placed in front of the point source to reflect directly forward routing rays back to reflector (1). This both blocks light travelling along an undesirable path reducing image quality and improves efficiency by reflecting it along a useful path. Reflector (3) may be omitted where lower power projection is acceptable. In this axis a virtual point source of light is produced that utilises approaching 360° of light emitted in this axis. It should be noted that the angle of light leaving the focal point (7) will be typically in the region of 17°. In applications where low efficiency is acceptable the source may be mounted at this point but this will reduce the efficiency to approximately 4.7% of the reflective system.

Considering the y axis, the source is non-ideal and will result in poor definition projection in this axis. As no information is projected in this axis the loss of definition is not important. However, if the line source is considered as a collection of point sources it is clear that only a small proportion of the emitted light in this axis will reach the projection optics. To reduce this loss a focussing lens (4) may be employed to focus the light onto the projection optics. As there are many point sources along this line the lens will not focus the line to an ideal point. The lens will however significantly increase the amount of usable light available at the projection optics.

A compromise must be taken with the lens as a different lens characteristic is required for different rays of light. A good compromise is to assume a point source on the reflector (1) will emit over an angle of 180°, with a distance of 120mm from source to projection optics only rays with $\pm 4°$, will reach 30mm projection optics. This can be extended to approximately $\pm 45°$ with an appropriate lens. As the optical characteristics of the system change with position along the line, this acceptance angle reduces further away from the centre line. It can however be assumed that an increase in available light of around five-fold can be expected compared to a system without this optional lens.

The combination of these optical components improves the energy efficiency of the system to around 100 times compared to a light source with no focussing optical components. The projection system is therefore able to produce very high intensity high definition lines with very short duration. The use of NIR filters can be employed to allow the system to capture 3D line data in an unobtrusive way for facial recognition systems and also to allow simultaneous capture of visible spectrum images to provide accurate texture mapping of colour onto the 3D model.

The use of a linear xenon tube mounted in the same axis as the line objective makes it possible to project high definition lines with a good depth of field. When combined with global shutter imaging technology and IR filtering, this results in a 3D modelling system that is unobtrusive to the eye, immune from the effects of ambient light, and has a good depth of field. The system is able to operate with coded or un-coded lines provided that the coding is on a single axis. The coding may be either in terms of thickness or level of opacity for mono colour coding. Coding schemes based on colour may be employed if alternate filtering arrangements are employed. Colour encoding with an IR filter can be achieved with wavelength specific filtering applied at the image system at pixel level.

Figure 2a shows that an ideal point source (8) passing through an objective (9) enters the lens (10) through a single path for any pint on the objective. In contrast, as shown in Figure 2b, a non-ideal source (11) produces a plurality of rays passing through any single point on (9) providing a plurality of rays passing through (10) resulting in a poorly focussed image.

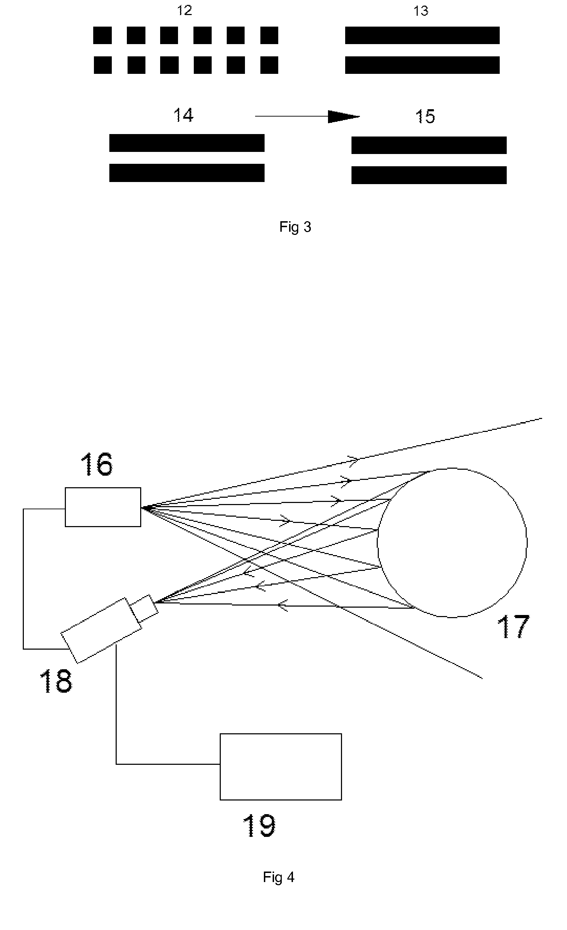

Figure 3 shows a series of rectangles (12) projected such that blurring of the vertical edges merge the vertical edges forming lines (13). Provided that blurring in the horizontal plane is kept to a minimum, high definition horizontal lines result. In practice, solid lines to be projected (14) result in solid lines being projected (15) as there is no information in the vertical plane to be lost.

Figure 4 shows line projection system (16) projecting a series of lines on an object (17). Imaging device (18) views object (17) such that the line structure projected on object (17) is viewed from a different angle to that of line projection system (16). Processing means (19) provide control of imaging device (18) and line projection system (16) and provide calculation means to produce 3D models.

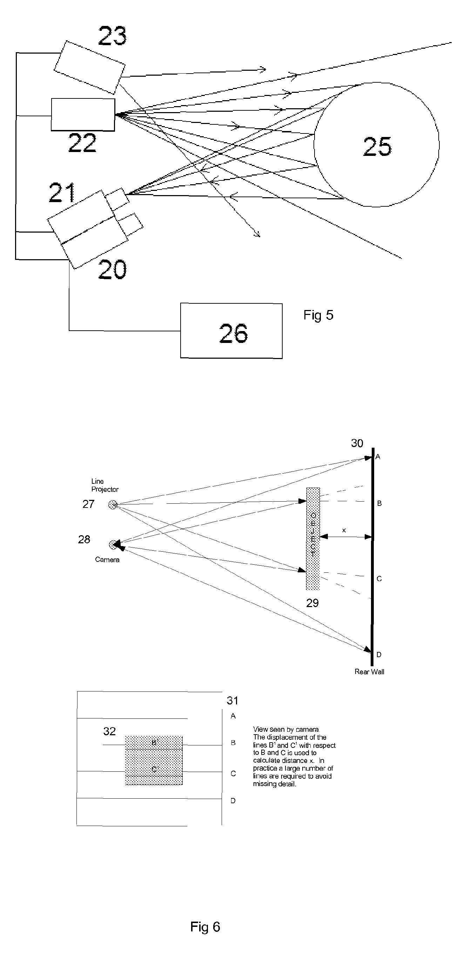

Figure 5 shows an embodiment of the invention where two images are acquired. A first image with NIR line data acquired by imaging device (20) and a second image with colour information only acquired by imaging device (21).

Projected lines from line projection system (22) are in the NIR spectrum only. Visible light with no NIR is projected by projector (23). Processing means (26) controls means to simultaneously acquire the data and processing means to build a 3D model based on data from imaging device (21) and to colour render the said 3D model with a colour image from imaging device (20). The colour and NIR images may be differentiated with one or more filters fitted to either (21) or (20) or both, or by the use of a beam splitter (not shown) to direct the NIR and colour rays to (21) and (20)

Figure 6 shows the principle of operation of 3D model generated by line projection where a line projector (27) projects a line structure onto an object (29) in front of a background (30). The line structure seen by imaging device (28) comprises a set of lines on the background (31) and lines on the object (32). The displacement of lines (32) with respect to lines (31) represents the distance x between (29) and (30).

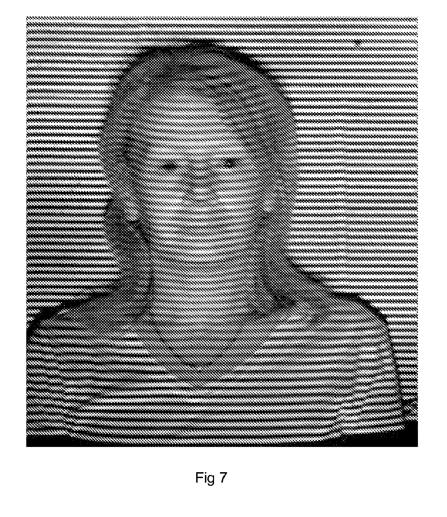

Figure 7 shows an image acquired of a subject with uncoded NIR lines projected and viewed by an imaging device off axis. The displacement of the lines in the foreground with respect to the lines on the background is used to calculated depth and to produce a 3D model of the subject.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of such features and/or steps are mutually exclusive. The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

**1.** A projection system for projecting a pattern onto an object, wherein the projection system comprises a light source, focussing means for focussing light from the light source at a focal plane, masking means for applying the pattern to the light, and a lens system for projecting the patterned light onto the object; **characterised in that** the light source is a linear light source having a longitudinal axis and **in that** the focussing means focuses the light from the light source to a line in the focal plane parallel to the longitudinal axis, thereby to project an image that is well-focussed in a direction perpendicular to the longitudinal axis and relatively less focussed in a direction parallel to the longitudinal axis.

**2.** A system as claimed in claim 1, wherein the focussing means comprises a curved, semi-cylindrical reflector positioned behind the linear light source.

**3.** A system as claimed in claim 2, wherein the reflector is concave with a curved cross-section that is substantially constant along its length, which length is itself substantially parallel to the linear light source.

**4.** A system as claimed in claim 3, wherein the curved cross-section is substantially parabolic.

**5.** A system as claimed in any one of claims 2 to 4, wherein the reflector is configured, and the linear light source is positioned, so as to focus the light from the linear light source onto a line along the focal plane, the line along the focal plane being substantially parallel to the longitudinal axis of the linear light source.

**6.** A system as claimed in any one of claims 2 to 5, wherein a second, smaller reflector is positioned in front of the linear light source to reflect directly forwardly routing light back to the said reflector.

**7.** A system as claimed in any preceding claim, wherein the focussing means further comprises a cylindrical lens provided in front of the linear light source and the reflector to focus the light onto the line.

**8.** A system as claimed in any preceding claim, further comprising a mask located at the focal plane, the mask including a slot aperture positioned at the line to allow passage of light to the lens system.

**10.** A system as claimed in any preceding claim, wherein the masking means is located at the lens system and comprises a patterned mask in the form of a set of substantially parallel slots all oriented substantially parallel to the linear light source, the reflector and the line in the focal plane on which the light is focussed.

**11.** A system as claimed in claim 10, wherein the patterned mask is configured to allow passage of only certain wavelengths or ranges of wavelengths, for example near infra red (NIR), ultra violet (UV) or visible wavelengths of particular colours.

**12.** A system as claimed in any preceding claim, wherein the linear light source is a linear gas discharge tube, preferably a xenon flash tube.

**13.** A system as claimed in any one of claims 1 to 11, wherein the linear light source is a pulsed light source.

**14.** A system as claimed in any one of claims 1 to 11 and 13, wherein the linear light source is a laser light source.

**15.** A projection system for projecting a pattern onto an object, wherein the projection system comprises a light source, masking means for applying the pattern to the light, and a lens system for projecting the patterned light onto the object, the lens system having a focal plane towards the light source; **characterised in that** the light source is a linear light source having a longitudinal axis and **in that** the linear light source is located along a line in the focal plane, thereby to project an image that is well-focussed in a direction perpendicular to the longitudinal axis and relatively less focussed in a direction parallel to the longitudinal axis.

Fig 1

Fig 2

12        13

14    →    15

Fig 3

16

17

18

19

Fig 4

23

22

21

20

Fig 5

26

Fig 6

30

Line Projector

27

28

Camera

29

A

B

x

C

D

Rear Wall

31

A

32

B

C

D

View seen by camera
The displacement of the
lines B' and C' with respect
to B and C is used to
calculate distance x.  In
practice a large number of
lines are required to avoid
missing detail.

Fig 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2410794 A

**Non-patent literature cited in the description**

- **CHRISTIAN FRUEH ; AVIDEH ZAKHOR.** Capturing 2½D Depth and Texture of Time-Varying Scenes Using Structured Infrared Light. *CVPR '05 Proceedings of the 2005 IEEE Computer Science Conference on Computer Vision and Pattern Recognition; Workshops,* 2005, vol. 3, 102